(19) **Europäisches Patentamt / European Patent Office / Office européen des brevets**

(11) **EP 1 914 561 B1**

(12) ## FASCICULE DE BREVET EUROPEEN

(45) Date de publication et mention de la délivrance du brevet:
**06.09.2017 Bulletin 2017/36**

(51) Int Cl.:
**G01S 19/20** *(2010.01)*     *G01S 19/15* *(2010.01)*

(21) Numéro de dépôt: **07291206.6**

(22) Date de dépôt: **04.10.2007**

(54) **Procédé de localisation d'un véhicule par satellites et garantie d'intégrité avec sélection d'un sous-groupe de satellites**

Verfahren zur Lokalisierung eines Fahrzeugs über Satellit und Integritätsgarantie mit Auswahl einer Untergruppe von Satelliten

Method of satellite location of a vehicle and guarantee of integrity with selection of a subgroup of satellites

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **09.10.2006 FR 0608828**

(43) Date de publication de la demande:
**23.04.2008 Bulletin 2008/17**

(73) Titulaire: **Safran Electronics & Defense 92100 Boulogne-Billancourt (FR)**

(72) Inventeur: **Vacher, Charlie 75018 Paris (FR)**

(74) Mandataire: **Lavialle, Bruno François Stéphane et al
Cabinet Boettcher
16, rue Médéric
75017 Paris (FR)**

(56) Documents cités:
**FR-A1- 2 866 423    US-A1- 2003 117 317**

- ESCHER, A. ET AL: "GNSS/IRS Hybridization: Fault Detection and Isolation of More than one Range Failure" PROCEEDINGS OF ION GPS 2002, 24 septembre 2002 (2002-09-24), pages 2619-2629, XP002433664 Portland, OR, USA
- BRENNER, M.: "Integrated GPS/Inertial Fault Detection Availability" NAVIGATION: JOURNAL OF THE INSTITUTE OF NAVIGATIONS, vol. 43, no. 2, 1996, pages 111-130, XP002433665 USA

EP 1 914 561 B1

## Description

La présente invention concerne un procédé de localisation d'un véhicule à partir de données satellitaires. Ce procédé peut notamment être mis en oeuvre dans le système de positionnement global connu sous l'acronyme GPS ("Global Positionning System").

ARRIERE PLAN DE L'INVENTION

Classiquement, la localisation d'un véhicule, tel qu'un aéronef, est réalisée à partir, d'une part, de données fournies par une centrale de mesure embarquée (incluant par exemple une centrale inertielle et un baroal-timètre) et, d'autre part, de données satellitaires provenant d'une constellation de satellites en orbite autour de la Terre. Le traitement combiné de ces données permet l'obtention d'une position précise, appelée ci-après position de référence, proche de la position réelle de l'aéronef. La précision de la position de référence est toutefois fortement sensible à une défaillance de la constellation de satellites, c'est-à-dire en cas d'une défaillance d'un satellite qui affecterait l'exactitude des données transmises et qui ne serait pas détectée ou en cas d'une défaillance simultanée ou de défaillances consécutives de deux satellites de la constellation (le risque de défaillance simultanée de trois satellites est tellement faible qu'il est en général négligé).

Il est pour cette raison habituel de fournir au pilote de l'aéronef un volume, dit de protection et appelé ci-après volume global de protection, centré sur la position de référence et représentatif de la précision de la position de référence en tenant compte du risque de défaillance d'un ou deux satellites. Le volume global de protection est un cylindre d'axe vertical défini par son rayon et sa hauteur usuellement nommés HPL et VPL. La position réelle de l'aéronef, si elle ne coïncide pas exactement avec la position de référence, a une probabilité au plus égale à un seuil de sécurité acceptable (ou risque d'intégrité) de se trouver hors du volume global de protection.

Le calcul du volume de protection correspondant à chaque cas repose sur la distribution statistique de l'erreur de position. Le calcul du volume global de protection suppose de définir le risque d'intégrité en tenant compte de la probabilité d'une absence de défaillance, de la survenue d'une défaillance et de la survenue de deux défaillances, et de déterminer le volume global de protection de telle manière que le risque d'intégrité soit au moins égal à la probabilité pour que la position réelle soit dans le volume global de protection.

La détermination de la distribution statistique et donc le calcul du volume de protection dans le cas d'une absence de défaillance ne pose pas de problème. La fonction de répartition de l'erreur de position est connue et il est alors possible d'estimer l'écart-type correspondant. Cette estimation n'est valide que sous l'hypothèse que la position est calculée sans utiliser de données erronées.

Le cas d'une défaillance d'un satellite est plus délicat car on ne peut pas valablement déterminer la distribution statistique de l'erreur de position sur une position affectée par une défaillance d'un satellite mais il est possible de s'affranchir de cette difficulté en calculant autant de positions secondaires qu'il y a de satellites et en excluant pour le calcul de chacune de ces positions les données fournies par un satellite de sorte qu'au moins une des positions secondaires n'est pas affectée par la défaillance d'un satellite. La position secondaire et le volume secondaire de protection correspondant donnant le plus grand volume global de protection est alors retenu.

Le cas d'une défaillance de deux satellites demande une puissance de calcul importante et est généralement négligé en considérant sa probabilité d'occurence trop faible pour justifier sa prise en compte.

Le document US-A-2004239560 décrit un tel procédé de calcul du volume global de protection.

Il a par ailleurs été recherché des moyens permettant de rendre le dernier cas négligeable. Il est ainsi connu de recourir à un algorithme de détection et d'isolation des défaillances minimisant le risque qu'une défaillance simultanée de deux satellites ne soit pas détectée et permettant alors de négliger ce cas dans le calcul du volume de protection. Cependant, un tel algorithme nécessite de disposer à bord de l'aéronef d'une puissance de calcul importante et allonge la durée de traitement des données. De plus, cette méthode nécessite une méthodologie de validation appropriée lourde à mettre en place dans la mesure où la performance de l'algorithme de détection et d'isolation des défaillances est directement liée à la sécurité (ou l'intégrité) de l'avion, une panne non détectée mettant en jeu la sécurité de l'appareil.

Le document ESCHER, A. et Al., "GNSS/IRS Hybridization: Fault Détection and Isolation of More than one Range Failure", Proceedings of ION GPS 2002, 24 septembre éàaé, pages 2619-2629, XP00243664, Portland, OR, USA décrit un procédé de localisation satellitaire mettant en oeuvre un calcul de limites de protection.

OBJET DE L'INVENTION

Il serait donc intéressant de disposer d'un moyen permettant de calculer le volume de protection de manière fiable tout en limitant les ressources informatiques nécessaires à ce calcul et les efforts de validation requis.

RESUME DE L'INVENTION

A cet effet, on prévoit, selon l'invention, un procédé de localisation d'un élément mobile par détermination d'une position de référence et d'au moins une limite globale de protection à partir d'un groupe de données satellitaires issues chacune d'un satellite d'une constellation de satellites, le calcul de la limite globale de protection comprenant l'étape de calculer des limites de protection en fonction de probabilités d'absence de défaillance de la constellation de satellites et de défaillance de la constellation de satellites, le procédé comprenant les étapes de :

- sélectionner dans le groupe de données satellitaires un sous-groupe comprenant au moins cinq données satellitaires,
- calculer une position principale à partir du groupe de données satellitaires,
- calculer des positions secondaires à partir du sous-groupe de données satellitaires en excluant une des données satellitaires pour le calcul de chaque position secondaire,
- calculer des limites de protection correspondant aux positions principale et secondaires en distinguant selon que la défaillance de constellation affecte ou pas les données satellitaires considérées,
- calculer la limite de protection globale à partir de la position de référence, de la position principale, des positions secondaires, des limites de protection correspondant aux positions principale et secondaires.

La sélection d'un sous-groupe dans le groupe de données satellitaires permet une simplification et une optimisation des calculs en introduisant la possibilité d'un choix des satellites pour former le sous-groupe.

En outre, selon l'invention :

- pour le cas d'une défaillance d'un satellite fournisseur du groupe de données satellitaires mais pas du sous-groupe de données satellitaires, la limite de protection correspondante est calculée sur une des positions secondaires,
- pour le cas d'une défaillance d'un satellite fournisseur du sous-groupe de données satellitaires, une limite de protection correspondante est calculée sur chaque position secondaire,
- pour le cas d'une défaillance de deux satellites fournisseurs du groupe de données satellitaires mais pas du sous-groupe de données satellitaires, la limite de protection est calculée sur une des positions secondaires,
- pour le cas d'une défaillance d'un satellite fournisseur du groupe de données satellitaires mais pas du sous-groupe de données satellitaires et d'un satellite fournisseur du sous-groupe de données satellitaires, une limite de protection correspondante est calculée sur chaque position secondaire,
- le cas d'une défaillance de deux satellites fournisseurs du sous-groupe de données satellitaires est rendu négligeable.

Le cas d'une défaillance de deux satellites est pris en compte et est rendu négligeable dans l'hypothèse d'une défaillance de deux satellites fournisseurs du sous-groupe.

Selon une autre caractéristique intéressante, le procédé comprend les étapes de calculer une position secondaire additionnelle à partir du sous-groupe de données satellitaires,

- pour une défaillance d'un satellite fournisseur du groupe de données satellitaires mais pas du sous-groupe de données satellitaires, la limite de protection correspondante est calculée sur la position secondaire additionnelle,
- pour une défaillance de deux satellites fournisseurs du groupe de données satellitaires mais pas du sous-groupe de données satellitaires, la limite de protection est calculée sur la position secondaire additionnelle.

Selon encore une autre caractéristique intéressante, des limites de protection horizontales et verticales sont calculées, le procédé comprenant l'étape de sélectionner deux sous-groupes différents pour le calcul des limites de protection horizontales et verticales.

Il est de la sorte possible de choisir les données satellitaires les plus adaptées au calcul de la limite de protection verticale et de la limite de protection horizontale en fonction notamment de la hauteur des satellites et de leur écartement mutuel.

D'autres caractéristiques et avantages de l'invention ressortiront à la lecture de la description qui suit d'un mode de mise en oeuvre particulier, non limitatif, de l'invention.

BREVE DESCRIPTION DES DESSINS

Il sera fait référence aux dessins annexés, parmi lesquels :

- la figure 1 est une représentation schématique d'une constellation de satellites présents au-dessus de l'horizon d'un aéronef,

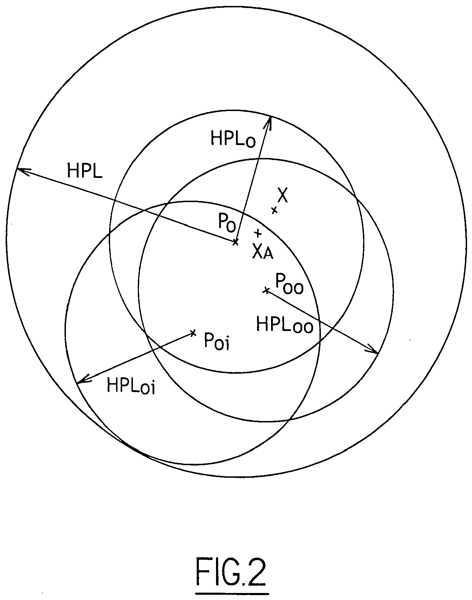

- la figure 2 est une vue schématique montrant les positions et limites de protection calculés pour localiser l'aéronef.

DESCRIPTION DETAILLEE DE L'INVENTION

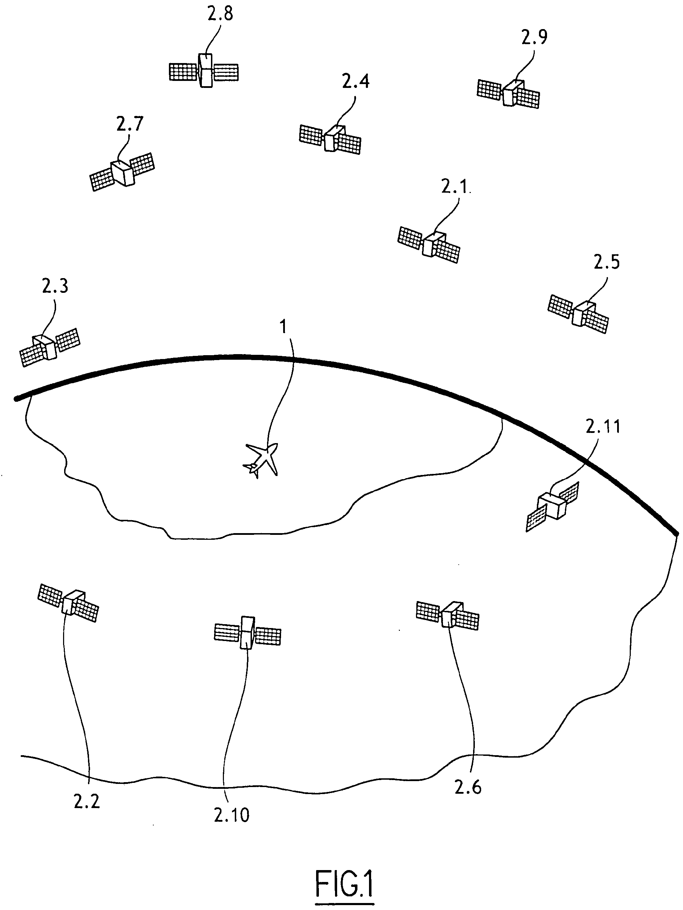

En référence aux figures, le procédé de l'invention est ici décrit en relation avec un aéronef 1 embarquant un système de navigation utilisant des données issues de N satellites 2.i (avec i variant de 1 à N, soit 2.1, 2.2, 2.3, 2.4, 2.5, 2.6, 2.7, 2.8, 2.9, 2.10, 2.11, sur la figure 1) en orbite autour de la Terre 100 et des données issues d'une centrale inertielle embarquée sur l'aéronef 1.

La centrale inertielle est connue en elle-même et délivre, à partir de capteurs fixés à l'aéronef 1, des données relatives notamment à l'assiette de l'aéronef 1, sa vitesse...

Les satellites 2.1 à 2.11 font partie d'un ensemble de satellites qui sont positionnés en orbite autour de la Terre et qui appartiennent à un système de localisation par satellites de type GPS. Chaque satellite 2.i émet en permanence un signal comportant sa localisation et l'heure précise d'émission du signal. Les N satellites 2.i émettent ainsi à intervalle régulier N signaux appelés par la suite données satellitaires.

Le système de navigation comprend de façon connue en elle-même une unité de calcul reliée à la centrale inertielle et à un récepteur des signaux issus des satellites. L'unité de calcul incorpore de façon connue en elle-même des processeurs et des mémoires lui permettant de calculer une pseudo-distance séparant l'aéronef 1 de chaque satellite 2.i dont le signal est détecté par le récepteur et de réaliser une fusion de ces pseudo-distances et des données provenant de la centrale inertielle afin de déterminer entre autres une position de l'aéronef 1.

La fusion est réalisée de manière connue en elle-même en utilisant des filtres de Kalman ou tout autre algorithme permettant de réaliser la fusion de données.

Le système de navigation fournit ainsi au moyen d'un filtre de référence une position précise $X_A$ ou position de référence à partir des données inertielles et des données satellitaires. La position précise $X_A$ est définie par une composante horizontale (ici une latitude et une longitude) et une composante verticale (ici une altitude).

Le système fournit également un volume global de protection défini par une limite globale de protection horizontale HPL et une limite globale de protection verticale VPL calculées à partir des données satellitaires.

Le volume global de protection, qui doit être le plus petit possible, est déterminé pour que, si la position réelle X de l'aéronef ne coïncide pas exactement avec la position calculée, cette position réelle a une probabilité au plus égale à un seuil de sécurité acceptable de se trouver hors du volume global de protection. On précisera dans la suite les opérations de calcul de la limite globale de protection horizontale. Les opérations de calcul de la limite globale de protection verticale sont similaires.

Les limites de protection sont calculées de façon connue en elle-même à partir de la distribution statistique de l'erreur sur la position calculée (distribution gaussienne pour la composante verticale de la position et distribution $\chi^2$ pour la composante horizontale de la position).

A titre d'exemple, pour la limite de protection horizontale HPL, on note $P(He \geq HPL) \leq P_{ir}$ où He est l'erreur horizontale de position et $P_{ir}$ est le seuil de sécurité acceptable également appelé risque d'intégrité. Ce risque d'intégrité ne doit pas être dépassé même en cas de panne d'un ou de deux des satellites de la constellation. Une panne de trois satellites de la constellation a une probabilité de $10^{-12}$ et est négligée. A titre d'exemple, pour la limite de protection horizontale HPL, on a donc :

$$
\begin{aligned}
(He \geq HPL) = \ & P(He \geq HPL,\ 0\ \text{défaillance}).\ P(0\ \text{défaillance}) \\
& + P(He \geq HPL,\ 1\ \text{défaillance}).\ P(1\ \text{défaillance}) \\
& + P(He \geq HPL,\ 2\ \text{défaillances}).P(2\ \text{défaillances}) \qquad (1)
\end{aligned}
$$

A titre d'explication, $P(He \geq HPL,\ 0\ \text{défaillance})$ signifie "probabilité que He soit supérieur ou égal à HPL en l'absence de défaillance" et $P(1\ \text{défaillance})$ signifie "probabilité de survenue d'une défaillance".

Le risque d'intégrité est lui aussi décomposé en fonction de ces différents cas :

$$
P_{ir} = K_1.P_{ir} + K_2.P_{ir} + K_3.P_{ir}
$$

avec les coefficients $K_1$, $K_2$ et $K_3$ correspondant respectivement aux cas absence de défaillance, présence d'une défaillance, présence de deux défaillances.

Or, il n'est pas possible de valablement déterminer une limite de protection si la position concernée a été calculée à partir d'au moins une donnée satellitaire erronée. On se ramène alors à une position dont le calcul n'est affecté d'aucune erreur.

Pour déterminer le volume global de protection, le système calcule également au moyen d'un filtre principal une position principale dite intègre $X_0$ à partir du groupe des N données satellitaires.

Dans l'invention, il est également prévu que le système opère une sélection d'un sous-groupe de n données satellitaires parmi le groupe des N données satellitaires pour calculer, au moyen d'un filtre secondaire, une position secondaire $X_{00}$ ou "première position secondaire". Les n données satellitaires sont choisies en fonction de leur pertinence pour la détermination de la composante horizontale de la position (les données provenant des satellites les plus écartés sont alors retenues) ou pour la détermination de la composante verticale de la position (les données provenant des satellites les plus hauts sont alors retenues). La pertinence des satellites est par exemple déterminée par la méthode des cosinus directeurs, en calculant la DOP (pour "dilution of précision", dilution de précision) pour les n constellations de n-1 satellites possibles et en conservant les satellites extraits des constellations ayant la DOP la plus faible.

Il est ensuite prévu de calculer, au moyen de n-1 filtres secondaires, n-1 "deuxièmes positions secondaires" $X_{0i}$ (pour i variant de 1 à n) en excluant la donnée satellitaire issue du satellite 2.i pour le calcul de chaque position secondaire.

Le calcul de limites de protection est ensuite réalisé sous l'hypothèse d'une absence de défaillance d'un satellite, dans le cas d'une défaillance d'un satellite et dans le cas d'une défaillance de deux satellites.

On prendra comme exemple, dans la suite de la description, le calcul de la limite horizontale de protection HPL.

Dans le cas où il n'y a pas de défaillance d'un satellite, toutes les données satellitaires sont bonnes. Le calcul de la limite de protection est effectué sur la position principale $X_0$ calculée avec les N données satellitaires. La probabilité qu'aucune de ces données ne soit affectée par une défaillance est de $(1-N)*10^{-5}$ par heure.

Par conséquent, on a :

$$P(He \geq HPL, 0 \text{ défaillance}).(1-N).10^{-5} \geq K_1 P_{ir}$$

$$\text{Soit } P(He \geq HPL, 0 \text{ défaillance}) = K_1 . \frac{P_{ir}}{(1-N).10^{-5}} \quad (2)$$

Dans le cas où il y a une défaillance d'un satellite du groupe de N satellites, il faut distinguer deux possibilités selon que :

- le satellite défaillant appartient au sous-groupe, la limite de protection est alors déterminée sur chaque position secondaire $X_{0i}$ (dont l'une est bonne puisqu'elle a été calculée sans recourir aux données du satellite défaillant),
- le satellite défaillant n'appartient pas au sous-groupe, la limite de protection est alors déterminée sur la position secondaire $X_{00}$ dont le calcul n'est pas affecté par la défaillance (alors que la position $X_0$ est vraisemblablement fausse).

On a dans ce cas :

$$K_2 P_{ir} = P(He \geq HPL, 1 \text{ défaillance dans n}).P(1 \text{ défaillance dans n})$$
$$+ P(He \geq HPL, 1 \text{ défaillance hors de n}).P(1 \text{ défaillance hors de n}) \quad (3)$$

On décide de répartir le risque d'intégrité de façon équiprobable entre les deux possibilités.

On obtient alors :

$$P(He \geq HPL, 1 \text{ défaillance dans n}) = k_2 . \frac{P_{ir}}{2.n.10^{-5}} \quad (4)$$

$$P(He \geq HPL, 1 \text{ défaillance hors de n}) = k_2 . \frac{P_{ir}}{2.(N-n).10^{-5}} \quad (5)$$

Dans le cas où il y a une défaillance de deux satellites, il faut distinguer trois possibilités selon que :

- les satellites défaillants appartiennent au sous-groupe, toutes les positions calculées sont alors fausses,

- l'un des satellites défaillants appartient au sous-groupe et l'autre n'appartient pas à celui-ci, la limite de protection est alors déterminée sur chaque position secondaire $X_{0i}$ (dont l'une a été calculée sans recourir aux données des satellites défaillants),
- les satellites défaillants n'appartiennent pas au sous-groupe, la limite de protection est alors déterminée sur la position secondaire $X_{00}$ dont le calcul n'est pas affecté par la défaillance (alors que la position primaire $X_0$ est vraisemblablement fausse).

La probabilité que deux pannes affectent les données satellitaires sur une mission de T heures est de $T.N^2.10^{-10}$.

On a dans ce cas :

$$K_3 P_{ir} = P(He \geq HPL, 2 \text{ défaillances dans n}). P(2 \text{ défaillances dans n})$$
$$+ P(He \geq HPL, 1 \text{ défaillance dans n et 1 hors de n}). P(1 \text{ défaillance dans n})$$
$$. P(1 \text{ défaillance hors de n})$$
$$+ P(He \geq HPL, 2 \text{ défaillances hors de n}). P(2 \text{ défaillances hors de n}) \qquad (6)$$

La partie de l'équation (6) concernée par la première possibilité est :

$$P(He \geq HPL \text{ pour 2 défaillances dans n}). P(2 \text{ défaillances dans n}) \qquad (7)$$

avec $P(2 \text{ défaillances dans n}) = T. n^2.10^{-10}$

Comme on ne peut calculer de limite de protection dans ce cas, toutes les positions étant fausses, on décide de donner la valeur de 1 à la probabilité que l'erreur de position soit supérieure à la limite de protection pour une défaillance de deux satellites fournisseurs du sous groupe. Ce cas n'est donc pas négligé mais au contraire pris en compte en lui affectant la probabilité la plus défavorable.

L'équation (6) devient alors :

$$K_3 P_{ir} - T.n^2.10^{-10} = P(He \geq HPL, 1 \text{ défaillance dans n et 1 défaillance hors de n})$$
$$. P(1 \text{ défaillance dans n}) . P(1 \text{ défaillance hors de n})$$
$$+ P(He \geq HPL, 2 \text{ défaillances hors de n}). P(2 \text{ défaillances hors de n})$$
$$\qquad (8)$$

On décide de répartir le risque d'intégrité restant soit $K_3 P_{IR} - T.n^2.10^{-10}$ de façon équiprobable entre la deuxième et la troisième possibilité.

On a donc pour la deuxième possibilité

$$\frac{K_3 P_{ir} - T.n^2.10^{-10}}{2} =$$

$$P(He \geq HPL, 1 \text{ défaillance dans n et 1 défaillance hors de n}). P(1 \text{ défaillance dans n})$$
$$. P(1 \text{ défaillance hors de n}) \qquad (9)$$

avec le produit de $P(1 \text{ défaillance dans n})$ et $P(1 \text{ défaillance hors de n})$ égal à $T.10^{-10}.n. (N-n)$, soit :

$$P(He \geq HPL, \text{1 défaillance dans n et 1 défaillance hors de n}) = \frac{K_3.P_{ir} - T.n^2.10^{-10}}{2.T.10^{-10}.n.(N-n)}$$

$$(10)$$

Pour la troisième possibilité, on a :

$$\frac{K_3.P_{ir} - T.n^2.10^{-10}}{2} =$$

$$P(He \geq HPL, \text{2 défaillances hors de n}). P(\text{2 défaillance hors de n}) \qquad (11)$$

avec P(2 défaillances hors de n) = T.$10^{-10}$.(N-n)$^2$
soit :

$$P(He \geq HPL, \text{2 défaillances hors de n}) = \frac{K_3.P_{ir} - T.n^2.10^{-10}}{2.T.10^{-10}.(N-n)^2} \qquad (12)$$

La limite de protection horizontale calculée sur la composante horizontale de la position $P_0$ est appelée $HPL_0$.
La limite de protection horizontale $HPL_0$ est déterminée de telle manière que :

$$P(He \geq HPL_0) = K_1 P_{ir} \qquad (13)$$

La limite de protection horizontale calculée sur la composante horizontale de la position $P_{00}$ est appelée $HPL_{00}$. Les formules (5) et (12) donnent toutes deux une valeur différente du risque d'intégrité sur la position $P_{00}$. Pour protéger cette position, il suffit de calculer une seule limite de protection horizontale $HPL_{00}$ correspondant au plus petit risque d'intégrité calculé par les formules (5) et (12). En pratique les coefficients $K_1$ et $K_2$ sont calculés pour obtenir des valeurs optimales (c'est-à-dire les plus proches possible) dans les formules (5), (12) mais également (4) et (10). D'autres critères de réglage peuvent naturellement être envisagés.
La limite de protection horizontale $HPL_{00}$ est déterminée à partir des formules (5) et (12), de telle manière que :

$$P(He \geq HPL_{00}) = \min(K_2.\frac{P_{ir}}{2.(N-n).10^{-5}} \; ; \; \frac{K_3 P_{ir} - T.n^2.10^{-10}}{2.T.10^{-10}.(N-n)^2}) \qquad (14)$$

La limite de protection horizontale $HPL_{00}$ ainsi calculée sur $P_{00}$ est ensuite ramenée à la position $P_0$ en calculant :

$$HPL_{00} = HPL_{00} + \text{distance } (P_0, P_{00}) \qquad (15)$$

La limite de protection horizontale calculée sur la composante horizontale de chaque position $P_{0i}$ est appelée $HPL_{0i}$.
Les limites de protection horizontales $HPL_{0i}$ sont déterminées à partir des formules (4) et (10), de telle manière que :

$$P(He \geq HPL_{0i}) = \min(K_2.\frac{P_{ir}}{2.n.10^{-5}} \; ; \; \frac{K_3 P_{ir} - T.n^2.10^{-10}}{2.T.10^{-10}.n.(N-n)}) \qquad (16)$$

Les limites de protection horizontales $HPL_{0i}$ ainsi calculées sur $P_{00}$ sont ensuite ramenées à la position $P_0$ en calculant :

$$HPL_{0i} = HPL_{0i} + \text{distance } (P_0, P_{0i}) \qquad (17)$$

La limite globale de protection horizontale HPL est alors calculée en recherchant la limite de protection maximale calculée précédemment, soit :

$$HPL = MAX \{HPL_0, HPL_{00}, HPL_{0i}\} \text{ pour } _i \text{ variant de 1 à N} \qquad (18)$$

Le mode de calcul est identique pour la limite de protection VPL.
A titre d'exemple numérique, on prend :

- $P_{ir}$ = 9.10$^{-8}$/ heure,
- $K_1.P_{ir}$ = 4, 12.10$^{-8}$/ heure,
- $K_2.P_{ir}$ = 1,9999.10$^{-8}$/ heure,
- $K_3.P_{ir}$ = 2,88065.10$^{-8}$/ heure,
- N = 10,
- n = 6, (les satellites retenus pour le calcul de HPL sont par exemple 2.2, 2.3, 2.5, 2.6, 2.7 et 2.8 ; les satellites retenus pour le calcul de VPL sont par exemple 2.4, 2.5, 2.7, 2.8, 2.9 et 2.11),
- T = 8

L'équation (12) donne $P(He \geq HPL_0)$ = 4,12.10$^{-8}$.
L'équation (14) donne $P(He \geq HPL_{oo})$ = 2,499 .10$^{-4}$.
L'équation (16) donne $P(He \geq HPL_{oi})$ = 1,666.10$^{-4}$.
Bien entendu, l'invention n'est pas limité au mode de réalisation décrit mais englobe toute variante entrant dans le cadre de l'invention telle que définie par les revendications.
En particulier, bien que les limites de protection aient été ramenées sur la position principale $P_o$, il et possible de ramener les limites de protection à la position précise $X_A$ en tenant compte de la distance ($P_o$, $X_A$). Dans le cas où le système incorpore des données autres que satellitaires, la position précise ou de référence est la position principale.
Il va de soi que l'invention est également utilisable avec d'autres systèmes de localisation par satellites comme le système GALILEO lorsque celui-ci sera fonctionnel.
Il est également envisageable de ne pas calculer la position secondaire $P_{00}$ ni les limites de protection associées. Les cas de pannes satellites normalement couverts par le calcul des limites de protection sur cette position sont alors traités par le calcul des limites de protection sur les deuxièmes positions secondaires.

**Revendications**

1. Procédé de localisation d'un élément mobile par détermination d'une position de référence et d'au moins une limite globale de protection à partir d'un groupe de données satellitaires issues chacune d'un satellite d'une constellation de satellites, le calcul de la limite globale de protection comprenant l'étape de calculer des limites de protection en fonction de probabilités d'absence de défaillance de la constellation de satellites et de défaillance de la constellation de satellites, **caractérisé en ce que** le procédé comprend les étapes de :

    - sélectionner dans le groupe de données satellitaires un sous-groupe comprenant au moins cinq données satellitaires,
    - calculer une position principale à partir du groupe de données satellitaires,
    - calculer des positions secondaires à partir du sous-groupe de données satellitaires en excluant une des données satellitaires pour le calcul de chaque position secondaire,
    - calculer des limites de protection correspondant aux positions principale et secondaires en distinguant selon que la défaillance de constellation affecte ou pas les données satellitaires considérées,
    - calculer la limite de protection globale à partir de la position de référence, de la position principale, des positions secondaires, des limites de protection correspondant aux positions principale et secondaires ;
    - pour une défaillance d'un satellite fournisseur du groupe de données satellitaires mais pas du sous-groupe de données satellitaires, la limite de protection correspondante est calculée sur une des positions secondaires,

- pour une défaillance d'un satellite fournisseur du sous-groupe de données satellitaires, une limite de protection correspondante est calculée sur chaque position secondaire,

- pour une défaillance de deux satellites fournisseurs du groupe de données satellitaires mais pas du sous-groupe de données satellitaires, la limite de protection est calculée sur une des positions secondaires,

- pour une défaillance d'un satellite fournisseur du groupe de données satellitaires mais pas du sous-groupe de données satellitaires et d'un satellite fournisseur du sous-groupe de données satellitaires, une limite de protection correspondante est calculée sur chaque position secondaire,

- une défaillance de deux satellites fournisseurs du sous-groupe de données satellitaires est rendue négligeable.

2. Procédé selon la revendication 1, comprenant les étapes de calculer une position secondaire additionnelle à partir du sous-groupe de données satellitaires,

- pour une défaillance d'un satellite fournisseur du groupe de données satellitaires mais pas du sous-groupe de données satellitaires, la limite de protection correspondante est calculée sur la position secondaire additionnelle,

- pour une défaillance de deux satellites fournisseurs du groupe de données satellitaires mais pas du sous-groupe de données satellitaires, la limite de protection est calculée sur la position secondaire additionnelle.

3. Procédé selon la revendication 1, dans lequel des limites de protection horizontales et verticales sont calculées, le procédé comprenant l'étape de sélectionner deux sous-groupes différents pour le calcul des limites de protection horizontales et verticales.

**Patentansprüche**

1. Verfahren zur Lokalisierung eines beweglichen Elements durch Bestimmung einer Referenzposition und mindestens einer globalen Schutzgrenze anhand einer Gruppe von Satellitendaten, die jeweils von einem Satelliten einer Satellitenkonstellation stammen, wobei die Berechnung der globalen Schutzgrenze den Schritt des Berechnens von Schutzgrenzen in Abhängigkeit von Wahrscheinlichkeiten eines Nichtvorhandenseins eines Ausfalls der Satellitenkonstellation und eines Ausfalls der Satellitenkonstellation umfasst, **dadurch gekennzeichnet, dass** das Verfahren die Schritte umfasst:

- Auswählen aus der Gruppe von Satellitendaten einer Untergruppe, die mindestens fünf Satellitendaten umfasst,

- Berechnen einer Hauptposition anhand der Gruppe von Satellitendaten,

- Berechnen von Nebenpositionen anhand der Untergruppe von Satellitendaten, indem ein Datenelement der Satellitendaten für die Berechnung jeder Nebenposition ausgeschlossen wird,

- Berechnen der Schutzgrenzen, die den Haupt- und Nebenpositionen entsprechen, indem unterschieden wird, ob der Konstellationsausfall die in Betracht gezogenen Satellitendaten beeinträchtigt oder nicht,

- Berechnen der globalen Schutzgrenze anhand der Referenzposition, der Hauptposition, der Nebenpositionen, der Schutzgrenzen, die den Haupt- und Nebenpositionen entsprechen,

- bei einem Ausfall eines liefernden Satelliten der Gruppe von Satellitendaten, jedoch nicht der Untergruppe von Satellitendaten wird die entsprechende Schutzgrenze für eine der Nebenpositionen berechnet,

- bei einem Ausfall eines liefernden Satelliten der Untergruppe von Satellitendaten wird eine entsprechende Schutzgrenze für jede Nebenposition berechnet,

- bei einem Ausfall von zwei liefernden Satelliten der Gruppe von Satellitendaten, jedoch nicht der Untergruppe von Satellitendaten wird die Schutzgrenze für eine der Nebenpositionen berechnet,

- bei einem Ausfall eines liefernden Satelliten der Gruppe von Satellitendaten, jedoch nicht der Untergruppe von Satellitendaten und eines liefernden Satelliten der Untergruppe von Satellitendaten wird eine entsprechende Schutzgrenze für jede Nebenposition berechnet,

- ein Ausfall von zwei liefernden Satelliten der Untergruppe von Satellitendaten wird vernachlässigbar gemacht.

2. Verfahren nach Anspruch 1, umfassend die Schritte des Berechnens einer zusätzlichen Nebenposition anhand der Untergruppe von Satellitendaten,

- bei einem Ausfall eines liefernden Satelliten der Gruppe von Satellitendaten, jedoch nicht der Untergruppe von Satellitendaten wird die entsprechende Schutzgrenze für die zusätzliche Nebenposition berechnet,

- bei einem Ausfall von zwei liefernden Satelliten der Gruppe von Satellitendaten, jedoch nicht der Untergruppe von Satellitendaten wird die Schutzgrenze für die zusätzliche Nebenposition berechnet.

**3.** Verfahren nach Anspruch 1, bei dem die horizontalen und vertikalen Schutzgrenzen berechnet werden, wobei das Verfahren den Schritt des Auswählens von zwei unterschiedlichen Untergruppen für die Berechnung der horizontalen und vertikalen Schutzgrenzen umfasst.

**Claims**

**1.** A method of locating a moving element by determining a reference position and at least one overall protection limit from data from a group of satellites in a constellation of satellites, the overall protection limit calculation comprising the step of calculating protection limits as a function of probabilities for the absence of failure in the constellation of satellites, and of failure in the constellation of satellites, the method comprising the steps of:

- from data from the group of satellites, selecting data from a subgroup comprising at least five satellites;
- calculating a main position from the data from the group of satellites;
- calculating secondary positions from the data from the subgroup of satellites by excluding data from one of the satellites when calculating each secondary position;
- calculating protection limits corresponding to the main and secondary positions while distinguishing whether the failure in the constellation does or does not affect the satellites taken into consideration; and
- calculating the overall protection limit from the reference position, the main position, the secondary positions, and the protection limits corresponding to the main and secondary positions;
- for failure of a data-supplying satellite of the group but not of the subgroup, the corresponding protection limit is calculated on one of the secondary positions;
- for failure of one data-supplying satellite of the subgroup, a corresponding protection limit is calculated on each secondary position;
- for failure of two data-providing satellites of the group but not of the subgroup, the protection limit is calculated on one of the secondary positions; and
- for failure of a data-supplying satellite of the group but not of the subgroup, and of a data-supplying satellite of the subgroup, a corresponding protection limit is calculated on each secondary position;
- failure of two data-supplying satellites of the subgroup is made negligible.

**2.** A method according to claim 1, comprising steps of calculating an additional secondary position from the subgroup of satellites,

- for failure of a data-supplying satellite of the group but not of the subgroup, the corresponding protection limit is calculated on the additional secondary position; and
- for failure of two data-supplying satellites of the group but not of the subgroup, the protection limit is calculated on the additional secondary position.

**3.** A method according to claim 1, in which the horizontal and vertical protection limits are calculated, the method comprising steps of selecting two different subgroups for calculating the horizontal and vertical protection limits.

FIG.1

FIG.2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• US 2004239560 A

**Littérature non-brevet citée dans la description**

• **ESCHER, A. et al.** GNSS/IRS Hybridization: Fault Détection and Isolation of More than one Range Failure. *Proceedings of ION GPS 2002, 24 septembre éààé,* 2619-2629